# EUROPEAN PATENT SPECIFICATION

(11) **EP 2 320 111 B1**
(45) Date of publication and mention of the grant of the patent: **28.12.2011**
(21) Application number: 09174977.0
(22) Date of filing: 04.11.2009
(51) Int. Cl.: F16H 61/02

(54) **Procedure for controlling gear changes in transmissions for vehicles**
Verfahren zur Steuerung von Gangwechseln in Getrieben für Fahrzeuge
Procédure de contrôle de changements de vitesse dans les transmissions de véhicules

(43) Date of publication of application: 11.05.2011
(73) Proprietor: ZF Friedrichshafen AG, 88038 Friedrichshafen (DE); IVECO S.p.A., 10156 Torino (IT)
(72) Inventor: Moser, Wilhelm, 88677, Markdorf (DE); Abbatantuoni, Vincenzo, 10134, Torino (IT)

(56) References cited:
- WO-A2-2004/081417
- DE-A1- 3 201 440
- DE-A1-102005 016 673

## Description

The invention refers to a procedure for controlling gear changes in transmissions for vehicles using an electronic control unit, which includes an automatic program and a manual program, where the automatic program performs a gear change as a function of recorded vehicle parameters through the electronic control unit, while, when the manual program is selected by the driver, the gear change is performed by the driver corresponding to input from the driver to at least one shift device, and where a return function is envisaged, through which a return from the manual program to the automatic program is carried out by monitoring an accelerator pedal setting. Furthermore, the invention refers to transmissions for vehicles that can be operated according to the procedure and to a computer program product for executing the individual steps.

With automatic transmissions and vehicles' automated manual transmissions, gear changes are typically made by an automatic program via an electronic control unit and using recorded vehicle parameters. These gear changes are performed corresponding to a gearshift strategy defined in each case in the automatic program. In many transmission designs, it is also possible for the respective driver to change selectively to a manual program through corresponding input to at least one shift device, for example a keypad close to the steering wheel and/or an additional shift gate in the selector lever. In this case, the gear changes are made in the automatic transmission corresponding to the driver's input to at least one shift device.

Normally, the manual program remains selected until the driver uses the shift device to return to the automatic program. However, in individual cases with measured driving in one gear, this can lead to the driver simply forgetting that he is in the manual program and reacting largely with surprise to the input to be given to the shift device when accelerating or braking. As this can cause the driver to be distracted, systems have been developed through which the automatic return from the manual program to the automatic program can be arranged in certain driving situations.

A procedure for controlling gear changes in transmissions for vehicles is known from DE 10 2005 016 673 A1, which discloses all the features of the preamble of claim 1 and in which a return function is envisaged, by means of which a manual program selected by the driver can return to an automatic program as a result of an electronic control unit. To this end, an accelerator pedal setting is recorded here, where the return to the automatic program is then executed if the accelerator pedal setting lies with defined limits within a defined period from the last gear pre-selected by the driver. A return to the automatic program is also executed if the operation of the accelerator pedal moves in a specific range over a certain period, for example if the vehicle moves at almost a constant speed over a longer distance.

However, there are driving situations in which a downshift is required by the driver in order to support a slowing down of the vehicle, for example when driving downhill, specifically from the engine's braking torque. Following this braking action, the vehicle is typically accelerated again, where the driver can forget to return specifically to the automatic program, in particular during longer downhill driving. In a procedure according to the prior art, this automatic return is not instigated, as the accelerator pedal setting changes considerably compared to the previous braking procedure and does not lie in the same range.

It is therefore the task of this invention to provide a procedure for controlling gear changes in transmissions for vehicles by means of which, a return from the manual program to the automatic program can be controlled with respect to changes in the driving dynamics, in particular when changing from a braking action to an accelerating procedure.

This task is solved in terms of process technology according to the preamble of claim 1 in conjunction with its characterizing features. The technical equipment for solving the task is based on transmissions for vehicles according to the preamble of claim 9 in conjunction with its characterizing features. The referring, dependent claims reflect the advantageous enhancement of the invention. With regard to a computer program product for executing the invention and a data carrier for saving it, we refer to claims 10 and 11.

The invention includes the technical explanation that at least the following steps are taken in the procedure for controlling gear changes: a) Check whether a gear change has been requested through input from the driver to at least one shift device, proceeding to step b) if this is the case, while otherwise a gear change is performed corresponding to the electronic control unit's automatic program; b) Compare the accelerator pedal setting with a limit, where the manual program is selected and the return function activated if the accelerator pedal setting is too low, and then to step c), while if the accelerator pedal setting is too high only the manual program is selected, and step c) Continual comparison of the accelerator pedal setting to the limit, where the automatic program is returned to if the accelerator pedal setting is too high compared to the limit, while otherwise the manual program continues and the return function remains active.

By means of the procedure according to the invention, an automatic return from the manual program to the automatic program can be controlled reliably following braking action by the vehicle. For at the moment when the driver inputs a gear change to the shift device in order to support braking, and thus activates the manual program, the accelerator pedal setting is used to determine whether the vehicle's engine is in trailing throttle or overrun condition. As the accelerator pedal is not typically activated during braking, the value of the accelerator pedal setting is lower than the limit. By activating the return function, the return to the automatic program is prepared. If the braking action is now ended, for example upon reaching the bottom of the hill, and if the accelerator pedal is subsequently reactivated and the accelerative force of the vehicle is represented through the engine, the value of the accelerative force exceeds the limit, this is detected and consequently the automatic program is returned to without this requiring a separate input from the driver. Accordingly, it is possible at this moment to relieve the driver.

Corresponding to an elaboration of the invention, the limit is formed by two thresholds, where there is a comparison with the first threshold in step b) and a comparison with the second threshold in step c). As a result, the procedure for the return function can be enhanced considerably by reducing the risk of unwanted return to the automatic program. Otherwise, when forming the limits by a single value, the return function for a return to the manual program is selected in cases where the value of the accelerator pedal setting is marginally below the limit, but thereupon there is a return to the automatic program if the limit is exceeded, for example as a result of a slight change in the accelerator pedal setting. By arranging the limits through two thresholds, these inadvertent double shifts can be prevented by a type of hysteresis.

In the further elaboration of the invention, in step c) a timer function with a defined period is started if the accelerator pedal setting value is higher than the limit, after the expiration of which there is a return to the automatic program. As a result of this measure, extremely short threshold transgressions are filtered out and thus the risk of an unwanted return to the automatic program is prevented.

In a further elaboration of the invention, an intermediate step is performed between step a) and b): d) Query whether a program change has been requested by the driver via the shift device, where if this is the case the manual program is selected and otherwise step b) is continued. Advantageously, there is a check as to whether the driver explicitly requested a program change first before comparing the accelerator pedal setting with the limit. Correspondingly, the control procedure can be reduced considerably in this case.

In further elaboration of the invention, in the confirmed case of step b) and before changing to the manual program and activation of the return function, an intermediate step is performed: e) Check whether a downshift has been requested by the driver, where if this is the case the manual program is selected, the return function activated and step c) applied, while otherwise the automatic program is selected. The benefit of this is that if the accelerator pedal setting is too low, only downshifts lead to the manual program being selected, while upshifts are only facilitated after a prior, explicit request for a program change. Consequently, the driver is protected against incorrect gearshifts.

Corresponding to a further, advantageous design of the invention, after the manual program has been selected and the return function activated, and before step c), an intermediate step is performed: f) Check whether the vehicle has come to a stop, where if this is the case the automatic program is immediately selected. As a result, the automatic program, which is better suited to this, can be selected after a standstill without the driver having to directly input this change in the shift device. Consequently, there is less work for the driver (relief).

In further elaboration of the invention, if the accelerator pedal setting value is too low in step c) a subsequent step is taken: g) Query whether a protection function against engine overspeed is active, where if this is the case downshifts are permitted through the at least one shift device, while otherwise downshifts and upshifts requested by the driver are prevented. This reliably excludes downshifts in a turns ratio, in which too high engine speed would be reached. Accordingly, damage to the engine as a result of such incorrect gearshifts can be prevented.

It is another advantageous embodiment of the invention that when the driver demands a program change, the change is always between the manual program and the automatic program. This guarantees the free selectability of the manual program or the automatic program through a corresponding input from the driver.

The solution according to the invention can also be embodied as a computer program product which, if it runs on the processor of the electronic control unit, directs the processor like software to execute the procedural steps allocated to the invention.

In this context, a computer-readable medium is part of the invention, on which a computer program product as described above is saved.

Other measures that improve the invention are explained below with the description of a preferred embodiment of the invention using a diagram.

The single diagram contains a flowchart of the procedure according to the invention. First of all, while driving forward, a gear change is performed in a transmission for vehicles, for example an automated manual transmission, according to an automatic program of an electronic control unit. In a first step a), there is a check as to whether a gear change has been requested by the driver by corresponding input to a shift device. If this is the case, an intermediate step d) is applied, while the gear changes are otherwise performed corresponding to the automatic program. In step d), there is then a query as to whether a program change has been requested by the driver by means of the shift device. If there is a request for a program change, a manual program of the electronic control unit is selected. In this manual program, gear changes are subsequently made corresponding to the driver's input to the shift device. If this is not the case, the subsequent step h) is directly applied in order to check whether the driver has requested a change to a neutral gear in the transmission by activating the shift device. If this is the case, a change to the automatic program is performed, while otherwise step b) is then applied.

In this step b), an accelerator pedal setting x_{Gsp} is compared to an initial threshold S1, where a lower accelerator pedal setting value x_{Gsp} results in an intermediate step e) being applied, while a higher accelerator pedal setting value x_{Gsp} results in the manual program being selected directly. By contrast, an intermediate step e) queries whether a downshift has been requested by the driver by activating the shift device. If this is the case, the manual program is also selected, but at the same time a timer function with a time T1 is set and a return function is activated, during the course of which a subsequent step f) is applied.

However, if in the intermediate step e) it is discovered that a downshift has not been requested, the request must necessarily be for an upshift. In this case, the driver's shift request is suppressed and the automatic program of the electronic control unit is selected.

In the case of the return function being activated and the subsequent step f) being applied, there is a check as to whether the vehicle has come to a stop. If the vehicle's standstill is detected, the change to the automatic program is again performed, while step c) is applied directly if the vehicle is still moving. In this step, the accelerator pedal setting x_{Gsp} is compared to a second limit S2, where a lower accelerator pedal setting value x_{Gsp} results in the subsequent step g) being applied. In the opposite case, the timer function is started or an already active time function is continued and the expiration of this time T1 is checked. In so doing there is always a jump to the start of intermediate step f) and consequently any vehicle standstill and the accelerator pedal setting are checked continuously. If time T1 has expired, the automatic program is selected again.

By contrast, in the affirmative case of step c), the timer function is interrupted and within the subsequent step g) there is a check as to whether a protection function against engine overspeed is active or not. If this function is activated, downshifts requested by the driver using the shift device are permitted, while upshifts are suppressed. If the protection function is not activated, on the other hand, both downshifts and upshifts are suppressed. Following on from either alternative of step g), there is a jump to the start of step f) and a new assessment of the vehicle's movement and then a new comparison of the accelerator pedal setting x_{Gsp} with the second threshold S2 is performed again.

If a downshift is requested by the driver while driving in the automatic program, in order to support vehicle braking through the engine's drag torque, and if in so doing the accelerator pedal is no longer activated, the manual program is selected and the return function activated. If the vehicle's braking procedure is ended, the timer function is started when the accelerator pedal is pressed and the automatic program is selected after expiration of the time T1. If the vehicle comes to a stop during the braking procedure, this change is performed immediately.

By means of the procedure according to the invention for controlling gear changes with a vehicle's automatic transmission, a return from the manual program selected by the driver into the automatic program after completion of the braking action can be performed reliably. In so doing, the procedure can be performed with a small number of parameters that have to be monitored, so that an application can be performed with low complexity. Overall, therefore, considerably less work can result for the driver (relief).

### References

- x_{Gsp}: Accelerator pedal setting
- S1: First threshold
- S2: Second threshold
- HS: Upshift
- RS: Downshift
- N: Neutral gear

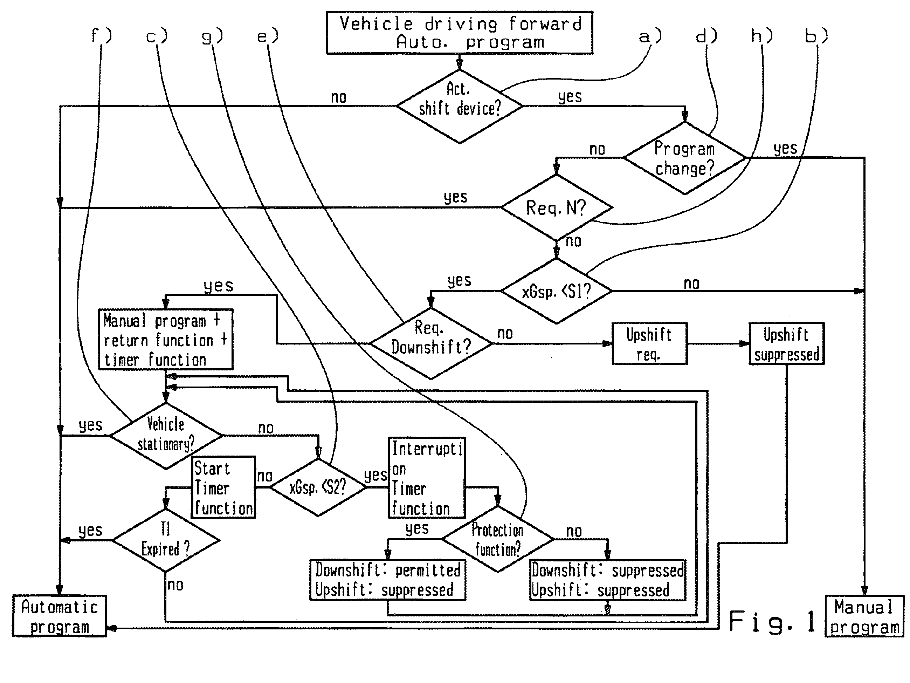

## Claims

1. Procedure for controlling gear changes in transmissions for vehicles using an electronic control unit, which includes an automatic program and a manual program, where the automatic program performs a gear change as a function of recorded vehicle parameters through the electronic transmission control unit, while, when the manual program is selected by the driver, the gear change is performed by the driver corresponding to input from the driver to at least one shift device, and where a return function is envisaged, through which a return from the manual program to the automatic program is carried out by recording an accelerator pedal setting (x_{Gsp}), **characterized in that** at least the following steps are applied:
a) Check whether a gear change has been requested by input from the driver to at least one shift device, where if this is the case step b) is applied, while otherwise a gear change continues to be performed corresponding to the automatic program;
b) Comparison of the accelerator pedal setting (x_{Gsp}) to a limit, where a lower accelerator pedal setting value (x_{Gsp}) results in the manual program being selected and the return function being activated, and step
c) is applied, while if there is a higher accelerator pedal setting (x_{Gsp}) only the manual program is selected, and
c) Continuous comparison of the accelerator pedal setting (x_{Gsp}) with the limit, where in the case of a higher accelerator pedal setting value (_{xGsp}), the automatic program is selected, while otherwise the manual program continues to be selected and the return function remains active.

2. Procedure according to claim 1, **characterized in that** the limit is formed by two thresholds, where there is a comparison with the first threshold (S1) in step b) and a comparison with the second threshold (S2) in step c).

3. Procedure according to claim 1 or 2, **characterized in that** in step c) a timer function with a defined period (T1) is started if the accelerator pedal setting value (x_{Gsp}) is higher than the limit, after the expiration of which there is a return to the automatic program.

4. Procedure according to one of the claims 1 to 3, **characterized in that** an intermediate step is applied between step a) and b):
d) Query whether a program change has been requested by input from the driver at the at least one shift device, where if this is the case the manual program is selected and otherwise step b) is applied.

5. Procedure according to one of the above claims **characterized in that** in the case of step b) and before changing to the manual program and activating the return function, an intermediate step is applied:
e) Check whether a downshift (RS) has been requested by the driver, where in this case the manual program is selected, the return function activated and step c) applied.

6. Procedure according to one of the above claims **characterized in that** after changing to the manual program and activating the return function, and before step c) an intermediate step is applied:
f) Check whether the vehicle has come to a stop, where if this is the case the automatic program is immediately selected.

7. Procedure according to one of the above claims **characterized in that** a lower accelerator pedal setting value (x_{Gsp}) in step c) leads to the subsequent step being applied:
g) Query whether a protection function against engine overspeed is active, where if this is the case downshifts (RS) are permitted through the at least one shift device, while otherwise downshifts (RS) and upshifts (HS) requested by the driver are prevented.

8. Procedure according to one of the above claims, **characterized in that** when the driver demands a program change, the change is always between the manual program and the automatic program.

9. Transmissions for vehicles, which have an electronic control unit with an automatic and manual program, where the electronic control unit controls gear changes corresponding to the automatic or manual program, **characterized in that** the electronic control unit is operated according to one of the above claims.

10. Computer program product for a transmission for vehicles according to claim 9, which is operated according to a procedure according to one of the claims 1 to 8, whereby the routine for checking the existence of gear change input by the driver, the comparison of a accelerator pedal setting (x_{Gsp}) with a limit, and the return from the manual program to the automatic program are performed through corresponding control commands in a software.

11. Data carrier with a computer program product according to claim 10.

## Patentansprüche

1. Verfahren zur Steuerung von Gangwechseln in Getrieben für Fahrzeuge unter Verwendung einer elektronischen Steuereinheit, die ein automatisches Programm und ein manuellen Programm enthält, wobei das automatische Programm einen Gangwechsel als Funktion aufgezeichneter Fahrzeugparameter durch die elektronische Getriebesteuereinheit durchführt, während bei Wahl des manuellen Programms durch den Fahrer der Gangwechsel durch den Fahrer entsprechend einer Eingabe vom Fahrer an mindestens eine Schaltvorrichtung durchgeführt wird, und wobei eine Rückkehrfunktion vorgesehen ist, durch die eine Rückkehr von dem manuellen Programm zu dem automatischen Programm durch Aufzeichnen einer Fahrpedaleinstellung (X_{Gsp}) durchgeführt wird, **dadurch gekennzeichnet, dass** mindestens die folgenden Schritte angewandt werden:
a) Überprüfen, ob ein Gangwechsel durch Eingabe von dem Fahrer an mindestens eine Schaltvorrichtung angefordert worden ist, wobei, wenn dies der Fall ist, Schritt b) angewandt wird, während ansonsten ein Gangwechsel entsprechend dem automatischen Programm weiter durchgeführt wird;
b) Vergleichen der Fahrpedaleinstellung (X_{Gsp}) mit einer Grenze, wobei ein unterer Fahrpedaleinstellungswert (X_{Gsp}) dazu führt, dass das manuelle Programm gewählt wird und die Rückkehrfunktion aktiviert wird und Schritt c) angewandt wird, während bei einer höheren Fahrpedaleinstellung (X_{Gsp}) nur das manuelle Programm gewählt wird, und
c) kontinuierliches Vergleichen der Fahrpedaleinstellung (X_{Gsp}) mit der Grenze, wobei bei einer höheren Fahrpedaleinstellung (X_{Gsp}) das automatische Programm gewählt wird, während ansonsten das manuelle Programm weiterhin gewählt wird und die Rückkehrfunktion aktiv bleibt.

2. Verfahren nach Anspruch 1, **dadurch gekennzeichnet, dass** die Grenze durch zwei Schwellwerte gebildet wird, wobei es zu einem Vergleich mit dem ersten Schwellwert (S1) in Schritt b) und einem Vergleich mit dem zweiten Schwellwert (S2) in Schritt c) kommt.

3. Verfahren nach Anspruch 1 oder 2, **dadurch gekennzeichnet, dass** in Schritt c) eine Zeitfunktion mit einer definierten Zeitdauer (T1) gestartet wird, wenn der Fahrpedaleinstellungswert (X_{Gsp}) höher ist als die Grenze, wobei nach deren Ablauf eine Rückkehr zu dem automatischen Programm erfolgt.

4. Verfahren nach einem der Ansprüche 1 bis 3, **dadurch gekennzeichnet, dass** zwischen Schritt a) und b) ein Zwischenschritt angewandt wird:
d) Abfragen, ob eine Programmänderung durch Eingabe von dem Fahrer an die mindestens eine Schaltvorrichtung angefordert worden ist, wobei, wenn dies der Fall ist, das manuelle Programm gewählt und ansonsten Schritt b) angewandt wird.

5. Verfahren nach einem der obigen Ansprüche, **dadurch gekennzeichnet, dass** im Falle von Schritt b) und vor Wechsel zu dem manuellen Programm und Aktivierung der Rückkehrfunktion ein Zwischenschritt angewandt wird:
e) Überprüfen, ob von dem Fahrer ein Herunterschalten (RS) angefordert worden ist, wobei in diesem Fall das manuelle Programm gewählt wird, die Rückkehrfunktion aktiviert wird und Schritt c) angewandt wird.

6. Verfahren nach einem der obigen Ansprüche, **dadurch gekennzeichnet, dass** nach Wechsel zu dem manuellen Programm und Aktivierung der Rückkehrfunktion und vor Schritt c) ein Zwischenschritt angewandt wird:
f) Überprüfen, ob das Fahrzeug zu einem Halt gekommen ist, wobei, wenn dies der Fall ist, das automatische Programm sofort gewählt wird.

7. Verfahren nach einem der obigen Ansprüche, **dadurch gekennzeichnet, dass** ein unterer Fahrpedaleinstellungswert (X_{Gsp}) in Schritt c) zur Anwendung des nachfolgenden Schritts führt:
g) Anfragen, ob eine Schutzfunktion gegen Motorüberdrehzahl aktiv ist, wobei, wenn dies der Fall ist, Herunterschaltungen (RS) durch die mindestens eine Schaltvorrichtung gestattet werden, wobei ansonsten Herunterschaltungen (RS) und Hochschaltungen (HS), die von dem Fahrer angefordert wurden, verhindert werden.

8. Verfahren nach einem der obigen Ansprüche, **dadurch gekennzeichnet, dass**, wenn der Fahrer eine Programmänderung fordert, der Wechsel immer zwischen dem manuellen Programm und dem automatischen Programm erfolgt.

9. Getriebe für Fahrzeuge, die eine elektronische Steuereinheit mit einem automatischen und einem manuellen Programm aufweisen, wobei die elektronische Steuereinheit Gangwechsel entsprechend dem automatischen oder manuellen Programm steuert, **dadurch gekennzeichnet, dass** die elektronische Steuereinheit gemäß einem der obigen Ansprüche betrieben wird.

10. Rechnerprogrammprodukt für ein Getriebe für Fahrzeuge nach Anspruch 9, das gemäß einem Verfahren nach einem der Ansprüche 1 bis 8 betrieben wird, wodurch die Routine zum Überprüfen des Vorhandenseins einer Gangwechseleingabe durch den Fahrer, den Vergleich einer Fahrpedaleinstellung (X_{Gsp}) mit einer Grenze und die Rückkehr von dem manuellen Programm zu dem automatischen Programm durch entsprechende Steuerbefehle in einer Software durchgeführt werden.

11. Datenträger mit einem Rechnerprogrammprodukt nach Anspruch 10.

## Revendications

1. Procédé de commande de changements de vitesses dans des transmissions de véhicules utilisant une unité de commande électronique, qui comporte un programme automatique et un programme manuel, dans lequel le programme automatique effectue un changement de vitesse en fonction de paramètres enregistrés du véhicule par le biais de l'unité de commande de transmission électronique, tandis que, lorsque le programme manuel est sélectionné par le conducteur, le changement de vitesse est effectué par le conducteur d'une manière correspondant à une intervention du conducteur au niveau d'au moins un dispositif de changement de vitesse, et dans lequel une fonction de retour est envisagée, par le biais de laquelle un retour du programme manuel au programme automatique est effectué par l'enregistrement d'une position de pédale d'accélérateur (X_{Gsp}), **caractérisé en ce qu'**au moins les étapes suivantes sont mises en oeuvre :
a) Vérifier si un changement de vitesse a été demandé par une intervention du conducteur au niveau d'au moins un dispositif de changement de vitesse, et si c'est le cas, l'étape b) est mise en oeuvre, tandis que dans le cas inverse, un changement de vitesse continue d'être effectué en fonction du programme automatique ;
b) Comparer la position de la pédale d'accélérateur (X_{Gsp}) avec une limite, une valeur de position de pédale d'accélérateur (X_{Gsp}) plus basse entraînant la sélection du programme manuel et l'activation de la fonction de retour, et l'étape c) étant mise en oeuvre, tandis que si l'on est en présence d'une valeur de position de pédale d'accélérateur (X_{Gsp}) plus élevée, seul le programme manuel est sélectionné, et
c) Comparaison en continu de la position de pédale d'accélérateur (X_{Gsp}) avec la limite, le programme automatique étant sélectionné dans le cas d'une valeur de position de pédale d'accélérateur (X_{Gsp}) plus élevée, tandis que dans le cas contraire, le programme manuel continue d'être sélectionné et la fonction de retour reste activée.

2. Procédé selon la revendication 1, **caractérisé en ce que** la limite est formée par deux seuils, une comparaison étant effectuée avec le premier seuil (S1) dans l'étape b) et une comparaison avec le deuxième seuil (S2) étant effectuée dans l'étape c).

3. Procédé selon la revendication 1 ou 2, **caractérisé en ce que** dans l'étape c), une fonction de temporisation de période définie (T1) est amorcée si la valeur de position de pédale d'accélérateur (X_{Gsp}) est plus élevée que la limite, et après l'expiration de cette période on revient au programme automatique.

4. Procédé selon l'une quelconque des revendications 1 à 3, **caractérisé en ce qu'**une étape intermédiaire est mise en oeuvre entre l'étape a) et l'étape b) :
d) Demander si un changement de programme a été demandé par l'intervention du conducteur au niveau de l'au moins un dispositif de changement de vitesse, et si c'est le cas, le programme manuel est sélectionné, et dans le cas inverse, l'étape b) est mise en oeuvre.

5. Procédé selon l'une quelconque des revendications précédentes, **caractérisé en ce que** dans le cas de l'étape b) et avant le passage au programme manuel et l'activation de la fonction de retour, une étape intermédiaire est mise en oeuvre :
e) Vérifier si un rétrogradage (RS) a été demandé par le conducteur, et dans ce cas, le programme manuel est sélectionné, la fonction de retour activée, et l'étape c) mise en oeuvre.

6. Procédé selon l'une quelconque des revendications précédentes, **caractérisé en ce qu'**après le passage au programme manuel et l'activation de la fonction de retour, et avant l'étape c), une étape intermédiaire est mise en oeuvre :
f) Vérifier si le véhicule s'est arrêté, et si c'est le cas, le programme automatique est immédiatement sélectionné.

7. Procédé selon l'une quelconque des revendications précédentes, **caractérisé en ce qu'**une valeur de position de pédale d'accélérateur (X_{Gsp}) inférieure dans l'étape c) conduit à la mise en oeuvre de l'étape suivante :
g) Demander si une fonction de protection contre une survitesse du moteur est active, et si c'est le cas, des rétrogradages (RS) sont autorisés par le biais de l'au moins un dispositif de changement de vitesse, tandis que dans le cas contraire, des rétrogradages (RS) et des passages à la vitesse supérieure (HS) demandés par le conducteur sont bloqués.

8. Procédé selon l'une quelconque des revendications précédentes, **caractérisé en ce que** lorsque le conducteur demande un changement de programme, le changement est toujours entre le programme manuel et le programme automatique.

9. Transmissions de véhicules qui possèdent une unité de commande électronique avec un programme automatique et un programme manuel, dans lesquelles l'unité de commande électronique commande des changements de vitesse correspondant au programme automatique ou manuel, **caractérisées en ce que** l'unité de commande électronique est utilisée selon l'une quelconque des revendications précédentes.

10. Produit de programme informatique pour une transmission de véhicules selon la revendication 9, qui est exécuté selon un procédé selon l'une quelconque des revendications 1 à 8, dans lequel le sous-programme pour vérifier l'existence d'un changement de vitesse demandé par le conducteur, la comparaison d'une valeur de position de pédale d'accélérateur (X_{Gsp}) avec une limite, et le retour du programme manuel au programme automatique sont effectués par des ordres de commande correspondants dans un logiciel.

11. Support de données avec un produit de programme informatique selon la revendication 10.
